# EUROPEAN PATENT SPECIFICATION

(11) **EP 3 292 714 B1**
(45) Date of publication and mention of the grant of the patent: **13.10.2021**
(21) Application number: 15727485.3
(22) Date of filing: 28.04.2015
(51) Int. Cl.: H04W 36/00, H04W 48/14

(54) **SOFTWARE-DEFINED WIRELESS DEVICE MANAGEMENT**
VERWALTUNG VON SOFTWARE-DEFINIERTER DRAHTLOSER VORRICHTUNG
GESTION DE DISPOSITIF SANS FIL DÉFINIE PAR LOGICIEL

(30) Priority: 29.04.2014 US 201414264525
(43) Date of publication of application: 14.03.2018
(73) Proprietor: Hewlett Packard Enterprise Development LP, Houston, TX 77070 (US)
(72) Inventor: GANU, Sachin, Sunnyvale, California 94089 (US); XIE, Jin, Sunnyvale, California 94089 (US); NARASIMHAN, Partha, Sunnyvale, California 94089 (US)
(74) Representative: Haseltine Lake Kempner LLP
(86) International application number: PCT/US2015/028033
(87) International publication number: WO 2015/168148

(56) References cited:
- WO-A1-2012/034588
- WO-A1-2012/034588
- WO-A1-2013/159648
- WO-A1-2013/159648
- WO-A1-2013/159648
- CN-A- 102 647 771
- CN-A- 102 647 771
- CN-A- 102 647 771
- US-A1- 2011 261 786

## Description

### FIELD

The present disclosure relates to network management in a wireless local area network (WLAN). In particular, the present disclosure relates to a mechanism for software-defined wireless device management in a WLAN.

### BACKGROUND

Wireless digital networks, such as networks operating under the current Electrical and Electronics Engineers (IEEE) 802.11 standards, are spreading in their popularity and availability. Conventionally, in a wireless local area network (WLAN), a network device is capable of finding the best radio of all access points (APs) in the WLAN for each client to connect with. Specifically, the network device can identify one or more clients with incompatible behaviors, and match the one or more clients to another radio of the same or different access point in the WLAN that the clients are compatible with. Thus, the conventional network device can homogenize client behaviors without requiring any client-side installation of software applications.

Some background information can be found in CN102647771A,WO2012/034588A1, WO2013/159648 and US2011/0261786.

Nevertheless, the approach described above has certain limitations. For example, there are a number of behaviors that the network device expects from the client devices. The client devices may not perform the expected behavior due to various reasons, e.g., lack of interoperability, power save mode configuration, device-specific configurations, etc. Therefore, a more flexible approach is needed for matching client devices to the best radios of the APs in the WLAN.

### BRIEF DESCRIPTION OF THE DRAWINGS

Various examples in accordance with the present disclosure will be described with reference to the drawings, in which:
FIG. 1 illustrates exemplary computing environment according to examples of the present disclosure.
FIG. 2 illustrates exemplary software-defined client management system according to examples of the present disclosure.
FIG. 3 illustrates an exemplary process for software-defined wireless device management in a WLAN according to examples of the present disclosure.
FIG. 4 illustrates an exemplary process for software-defined wireless device management in a WLAN according to examples of the present disclosure.
FIG. 5 illustrates an exemplary process for software-defined wireless device management in a WLAN according to examples of the present disclosure.
FIG. 6 is a block diagram illustrating an exemplary system for software-defined wireless device management in a WLAN according to examples of the present disclosure.

### SUMMARY

The invention is disclosed in the appended claims.

### DETAILED DESCRIPTION

In the following description, several specific details are presented to provide a thorough understanding. While the context of the disclosure is directed to wireless device management in wireless networks using one or more application programming interfaces, one skilled in the relevant art will recognize, however, that the concepts and techniques disclosed herein can be practiced without one or more of the specific details, or in combination with other components, etc. In other instances, well-known implementations or operations are not shown or described in details to avoid obscuring aspects of various examples disclosed herein.

### COMPUTING ENVIRONMENT

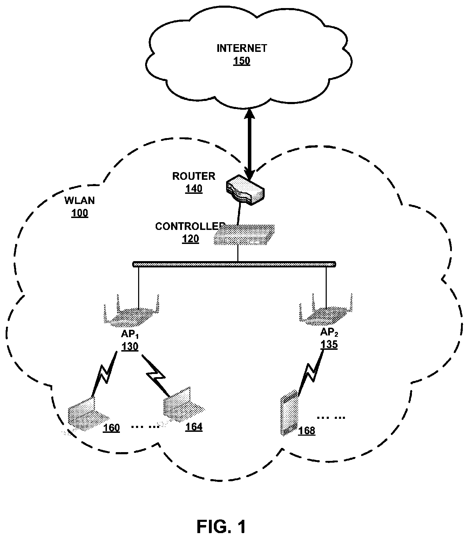

FIG. 1 shows exemplary computing environment according to examples of the present disclosure. Specifically, FIG. 1 includes a network controller 120 and a plurality of access points, e.g., AP1 130 and AP2 135, in a wireless local area network (WLAN) 100. WLAN 100 may be also connected to Internet 150 or another external network via a router 140. Moreover, network controller 120 is communicatively coupled with one or more access points (APs), such as AP1 130 and AP2 135, to provide wireless network services by transmitting network packets. Any number of network controllers and/or access points may be utilized. As used herein, an "access point" (AP) generally refers to a receiving point for any known or convenient wireless access technology which may later become known. Specifically, the term AP is not intended to be limited to IEEE 802.11-based APs. APs generally function as an electronic device that is adapted to allow wireless devices to connect to a wired network via various communications standards.

Network according to examples of the present disclosure may operate on a private network including one or more local area networks. The local area networks may be adapted to allow wireless access, thereby operating as a wireless local area network (WLAN). In some examples, one or more networks may share the same extended service set (ESS) although each network corresponds to a unique basic service set (BSS) identifier.

In addition, network depicted in FIG. 1 may include multiple network devices, such as network controllers, access points, routers, network servers, etc. Each network controller device (e.g., a network controller or an access point) may be located in a separate sub-network. The network controller device may be responsible for managing one or more additional network devices, such as access points or network servers, within the sub-network.

Moreover, in the exemplary network depicted in FIG. 1, a number of client devices are connected to the access points in the WLAN. For example, client devices 160- 164 are associated with AP1 130, and client devices, such as client device 168, are associated with AP2 135. Note that, client devices may be connected to the access points via wired or wireless connections in any suitable configuration.

During network operations, a wireless station, such as client device 160, client device 164, or client device 168, is associated with a respective access point, e.g., access point AP1 130, access point AP2 135, etc. Access points may have varying capabilities. For example, AP1 130 may support IEEE 802.1 lac standards, whereas AP2 135 may support IEEE 802.1 In standards. Likewise, client devices may have varying capabilities as well. For example, client device 160 may be compatible with IEEE 802.1 In standard, whereas client device 168 may be compatible with both IEEE 802.1 lac and IEEE 802.1 In standards.

Optionally, network controller 120 may maintain a data store for storing client device capability information about one or more client devices. Additionally, or alternatively, network controller 120 may maintain a data store (e.g., the same data store used to store the capability information about one or more client devices) for storing network device capability information about one or more network devices (e.g., one or more access points). Network controller 120 may utilize the client device capability information and network device capability information to determine that a particular access point (e.g., AP 1 130) has sufficient capabilities to provide network service to a client device (e.g., client device 168). Such a determination by network controller 120 can be communicated (e.g., using a set of instructions) to access points, including AP1 130 and AP2 135, in WLAN 100. In response to receiving the communication from network controller 120, an access point (e.g., AP2 135) may de-authenticate a client device (e.g., client device 168), such that the client device (e.g., client device 168) is no longer provided network service by the access point. Optionally, the client device may proceed with establishing an association with another access point (e.g., AP1 130). In at least one example, another access point (e.g., AP 1 130) may include different capabilities that are better suited to providing network service to client device than a the capabilities of a previously associated access point. Thus, the client device may be provided better network service (e.g., less dropped packets, lower latency connection, greater bandwidth, etc.) by a particular access point depending on the capabilities of the access point.

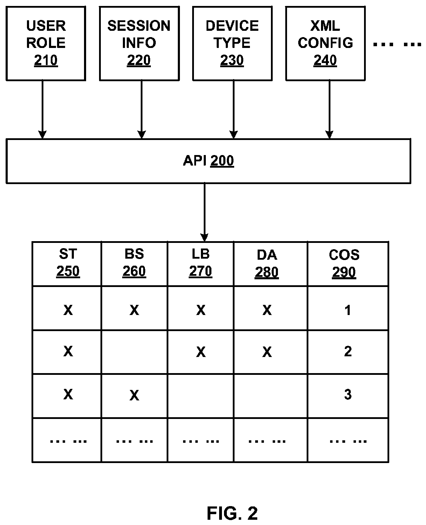

FIG. 2 illustrates an application programmable interface (API) that is provided by the network controller and/or the APs of FIG. 1 in a WLAN. Such an API may be utilized by an external entity (e.g., a laptop operated by network administrator) in order to modify configuration of the network in real-time. The external entity may include any type of hardware device and/or software application capable of transmitting information an application programming interface. FIG. 2 includes API 200 which includes one or more interface parameters including, but not limited to a user role 210, session information 220, a device type 230, an XML configuration 240, etc.

FIG. 2 also includes an exemplary mapping of one or more interface parameters to a network service category (COS 290) for a client device and/or a set of client devices. A "network service category" (alternatively referred to herein as a "class of service category" or "COS") may specific a set of network control actions that are available for a client device and/or a set of client devices. In at least one example, execution of a "network control action" may alter at least one configuration of the network (e.g., by modifying an association between a client device and an access point). As used herein, execution of a "network control action" may include, but is not limited to, modifying association information indicating an association between a client device and an access point, inhibiting an association modification, selecting a particular mechanism for modifying the association information, selecting a particular time for modifying the association information, or enforcing a threshold number of association modifications for the client device during a specified time period.

Optionally, one or more interface parameters may be used to determine a network service category for a particular client device (or group of client devices).

The mapping can be configured either by a network administrator and/or be trained or modified using dynamic machine learning technologies. For example, over time, a network device (e.g., the network controller 120 of FIG. 1 or an access point of FIG. 1) may receive indication (e.g., using API 200) that a particular network application executing on a client device is encountering problems (e.g., network traffic corresponding to the application running on the client device indicates dropped packets over a threshold number). In response to such an indication, the network device may modify a network service category associated with the client device (e.g., the mapping). Therefore, the network device may adjust network service provided to a client device dynamically, in real-time.

### INTERFACE PARAMETERS

Generally speaking, the interface parameters of API 200 include, but are not limited to, a type of traffic, a user role, an operating system, session information, a device type, a manufacturer of device, a Network Interface Card (NIC) of a device, an application type, etc. A combination of interface parameters may be used to control various network configurations (e.g., an association between a client device and an access point). In at least one example, one or more interface parameters may be used to determine whether to move a particular client device (or a particular set of client devices) from one radio of one access point to another radio of a different access point in the WLAN.

### A. User Role

API 200 may specify user role 210 as an interface parameter. For example, a user of the client device may be associated with a special user role (e.g., VIP). A network device can be configured to provide a different class of service (e.g., according to a network service category) for the client devices that are authenticated by users belonging to the special user role. The different class of service may be associated with a number of network control actions that, for example, may ensure that the a client device is matched to a best radio among all APs in the WLAN, and/or ensure that the client device is not deauthenticated from an AP (e.g., ever or for a period of time), and/or ensure a minimum quality of service for the client devices, etc.

In the following example, all sessions associated with a user whose user role is "admin" are configured to be provided with "platinum" level class of service.
user-role admin
access-list session allow-all
cm-cos platinum

### B. Session Information

Session information 220 may specify what type of traffic is being transmitted on a particular client device or a particular set of client devices. For example, if the system determines that a client device is currently making a voice call, the system may perform various actions based on the determination that the voice call is active. For example, the system may be configured to avoid de-authenticating a client device when a voice call is active. As another example, the system may determine to move a client to a different radio and/or access point upon detecting poor voice call quality.

As another example, the system may disassociated a first client device (e.g., a client device that is not on an active call) from a first AP and associate the first client device to a second AP, so that an incoming client device (e.g., a client device that is on an active call) can be associated with the first AP. In at least one example, modifying the association of the first client device may be performed due to the first AP having capabilities that make it being better suited than the second AP to provide higher voice call quality.

In at least one example, the network system may detect that a particular client device is roaming from a first AP to a second AP. A number of client devices (e.g., 10 devices) are currently associated with the second AP, which does not have any extra capacity for accommodating an incoming client device on an active voice call. Furthermore, the network system can detect that the client devices that are currently associated with the second AP are running applications (e.g., Internet browsers) that use Hypertext Transfer Protocol (HTTP) for data transmissions. Thus, the network system can proactively move a subset of client devices that are currently associated with the second AP to a different AP prior to the particular client device sends an association request to the second AP. Such actions may ensure that the second AP has the capacity to provide network service to the incoming client device on an active voice call.

In some examples, when a client device is executing a unified communication (UC) application for a video/audio call, a user can set the session information interface parameter based on a known port number and/or Media Access Control (MAC) identifier. When it is known that the UC application has low tolerance for the network packet loss, the user (e.g., a network administrator) can configure the set of client devices running such client-side application to be associated with a network service category that corresponds to a high quality of network service.

In the following example, if session information indicates that a particular type of application, e.g., Lync® application, has become active on a client device, the client device will be provided with "platinum" level class of service until the session expires.
ip access-list session lync-acl
any any svc-sips permit queue high cm-cos platinum any any any permit

### C. Device Type

A device type, device behaviors, or an operating system, can also be included as an interface parameter of the application programming interface. For example, the system can detect (e.g., using network traffic, predefined identification data, and/or a device fingerprint) that a client device is an Apple® device installed with iOS® operating system. Based on the device type and/or operating system, the system may allow a client device to move from one AP to another AP in the WLAN. Alternatively, based on the device type and/or operating system, the system may inhibit the client device from moving from one AP to another AP. As a further example, the system may limit the number of moves for a particular client device installed with a particular operating system.

### D. XML Configuration

In addition, the system may allow the external entity to provide a user-defined rule for mapping a set of configuration parameters to a particular network service category. Such a user-defined rule may be provided using an interface parameter (e.g., XML Configuration interface parameter of FIG. 2) of the application programming interface (e.g., API 200 of FIG. 2). In some cases, the rule may be defined using a markup language (e.g., extensible markup language (XML)). The XML configuration can be configured by a user dynamically without requiring any code change in the system's existing logic used for moving client devices.

In a non-limiting example, many client devices may subscribe to the same multicast stream. These client devices may be initially associated with different APs in the WLAN. It is generally undesirable for multiple client devices subscribing to one multicast stream (sharing a multicast address) to be connected to different APs because traffic intended for the multicast stream would have to be sent to each AP that was associated with each client device subscribed to the multicast stream. If on the other hand, all client devices subscribing to the same multicast stream are connected to the same AP, then the system need only transmit one copy of the multicast packet to one AP (e.g., the AP shared by the client devices subscribed to the multicast stream). This would greatly improve the efficiency of the network system by avoid flooding extra multicast packets in the network system.

Nevertheless, the network system may not be aware that there are multiple client devices subscribing to the same multicast stream that are connected to different APs in the WLAN. An external entity (e.g., a computing device operated by a network administrator, a network monitoring device), however, may be aware of the multicast stream subscription information. Thus, the external entity can use the XML configuration interface parameter of FIG. 2 to group the client devices based on their multicast stream subscription. Receipt of the XML configuration interface parameter may trigger the network system to move all client devices subscribing to the same multicast stream to the same radio and/or AP in the WLAN.

In the following example, if a client device is known to be incompatible with network devices of the network system, for instance, based on its operating system (OS) and/or Network Interface Card (NIC), then the network system can alter its default behavior based XML defined rule such as the one described below. Specifically, the sample rule defined below limits the number of steers to one move per 5 minutes for iOS based client devices. Such a rule may be communicated between network devices using the application programming interface (e.g., using the XML Configuration interface parameter of the application programming interface).

```
           <Rule>
                <device_type>Ipad</device_type>
                <os_begin_version>5.O</os_begin_version>
                <os end version>6.4</os end version>
                <nic version>BCMXXXX</nic version>
                <steer interval>300</steer interval>
                <cm-cos>default</cm-cos>
           </Rule>
```

### NETWORK CONTROL ACTIONS

API 200 may further provide an interface to enable an external entity to specify one or more network control actions to be performed on a particular client device or a set of client devices. Additionally, or alternatively, the external entity can provide input on how to map one or more interface parameters applicable to a particular client device (or a set of client devices) to a predefined (or dynamically learned) network service category. A network service category may specify a set of available network control actions. Execution of a network control action may alter a configuration of the network. For example, a network control action includes, but is not limited to, modifying association information indicating an association between a client device and an access point, inhibiting an association modification, selecting a particular mechanism for modifying the association information, selecting a particular time for modifying the association information, or enforcing a threshold number of association modifications for the client device during a specified time period, etc.

### A. To Move or Not To Move Client Device

First, the API can enable an external entity to configure (e.g., provide a rule) as to whether or not to move a client device (or a set of client devices) using a combination of the interface parameters. As used herein, a "move," or "moving" a client device is intended to refer to disassociating the client device from an access point and associating the client device to a different access point. In some examples, the external entity, using the application programming interface, may stimulate the system to move a client device if the client device is on an active voice call. In some examples, the external entity, using the application programming interface, specify that the network system shall not move a client device on an active voice call, such that the client device will not experience any disrupted network services.

The set of rules associated with providing network services to a client device can be either statically defined or dynamically detected. In at least one example, a rule of the set of rules provides a mapping between one or more interface parameters and a network service category. Additionally, or alternatively, a rule may map one or more interface parameters to a set of network control actions. For example, a rule may specify that the network system move a client to a different radio and/or access point upon detecting poor voice call quality. Thus, during runtime, when the network system detects that the quality of a voice call is poor (e.g., below a quality threshold value) for a particular client device, the network device may (e.g., utilizing the application programming interface) cause the particular client device to move to a different radio and/or access point. If, however, the network device detects that the quality of the voice call is above a quality threshold value for the particular client device, then the network system will not move the particular client device to a different radio/AP.

### B. Threshold Number of Moves

Some client devices, according to their vendor's default configurations, will stop trying to connect to the network if the client device has been de-authenticated (e.g.,disassociated from an access point) by the network system for more than a threshold number of times. For these client devices, the API may enable an external entity to configure a rule that specifies a maximum number of moves allowed by the network system. For example, a maximum of three moves may be allowed by the WLAN infrastructure. Accordingly, after three unsuccessful attempts to move a particular client device to associate with a different access point, the network system , in accordance with the rule, will not activate any move mechanisms in order to avoid causing the client device to permanently disconnecting with the WLAN.

In some examples, after the network system moves a particular client device from a first wireless frequency band (e.g., 2.4GHz band) to a second wireless frequency band (e.g., 5GHz band), the particular client device may reverse the move. For example, the client device may continuously assess the received signal strength on various frequency bands and detect that the received signal strength on the first wireless frequency band is stronger than that on the second frequency band. Thus, the particular client device may disassociate with the WLAN on the second wireless frequency band, and re-associate with the WLAN on the first wireless frequency band. When the network system dynamically detects such client behaviors of reversing moves initiated by the network system, the network system may set a limit on the maximum number of moves attempted for such client devices. If the client particular client device continues to move back to the first wireless frequency band after a maximum threshold number of moves, the network system will not attempt to move the particular client device to a different AP or radio in the WLAN.

In accordance with at least one example, the network system can learn a rule associated with client device behaviors dynamically, and store the rule that may be applicable in the future. For example, when the network system detects that a particular client device identified by a particular MAC address exhibits the above described "reversal" behavior, the network system can store the MAC address of the particular client device on a list. When the particular client device associates with the network system in the future, the network system will apply a static rule that limit the number of move attempts to, e.g., three times.

Moreover, the stored rule can be evolving over a period of time based on observed client behaviors. For example, when the same client device joins the WLAN for the third time, the network system may adjust the maximum allowed number of moves to two instead of three because of the persistent "reversal" behaviors observed from the same client device in the past.

### C. Selective Moves

The API can enable an external entity to specify a particular move mechanism for a particular client device. A "move mechanism" includes, but is not limited to, a sticky move mechanism, a band steering mechanism, a load balancing mechanism, etc. In at least one example, execution of a network control action facilitates execution of one or more move mechanisms. In some examples, the external entity can specify precise control of move mechanisms through an interface parameters (e.g., an XML configuration interface parameter of FIG. 2).

In some examples, for sticky move mechanism, the external entity can provide an interface parameter that specifies a first threshold level of signal noise ratio (SNR) associated with a signal transmitted from a current AP. In addition, the external entity can provide an interface parameter that specifies a second threshold level of SNR acceptable at a target AP. Thus, when the SNR associated with a signal received from the current AP drops below the first threshold level, the network system will search for a target AP, whose signal's SNR exceeds the second threshold level, and steer the client device to associate with the target AP.

In some examples, for band steering mechanism, the external entity can provide an interface parameter that specifies a first threshold level associated with a signal strength on a first wireless frequency band (e.g., 2.4GHz band), and/or a second threshold level associated with a signal strength on a second wireless frequency band (e.g., 5GHz band). Thus, when the received signal strength by a client device on the first wireless frequency band is weaker than the first threshold and/or when the received signal strength by the client device on the second wireless frequency band is stronger than the second threshold, the network system may steer the client device to disassociate with the network on the first wireless frequency band, and re-associate with the network on the second wireless frequency band.

In some examples, for load balancing mechanism, the external entity can provide an interface parameter that specifies a threshold number of client devices associated with a particular radio of an access point. When the total number of client devices associated with the particular radio of the access point exceeds the threshold number, the network system will initiate a move of a client device to a different radio and/or access point to balance the load on the particular radio of the AP.

In some examples, for load balancing mechanism, the external entity can provide an interface parameter that specifies a minimum threshold of SNR associated with a target radio of a target AP. Thus, when the SNR associated with the target AP that is under loaded exceeds the minimum threshold, the network system will initiate a move of one or more client device from other radios and/or APs to the target radio of the target AP.

Moreover, the API can enable an external entity to select a particular time period for moving a particular client device. For example, in some examples, the network system may delay the second move attempt by a predefined period of time, e.g., after 30 minutes. If the second move attempt has been undone by the client device, the network system further delays the third move attempt by an additional predefined period of time, e.g., after 60 minutes. The delay can be subsequently increased exponentially until it exceeds a threshold period of time after which the network system will not attempt to move the client device. Also, the network system may adjust the time period to match the preference and/or configurations of the particular client device.

Optionally, the API can enable an external entity to select a particular subset of client devices meeting certain criteria to be moved by the network system. For example, the external entity can select the particular subset of client devices based on a combination of triggers and assign a class of service (e.g., silver class of service, or level 2 class of service) to the particular subset of client devices.

Optionally, the API can enable an external entity to select a particular protocol for moving the client devices. For example, for some client devices, the network system may de-authenticate the client devices to allow them to associate with a different AP in the WLAN. For other client devices that support IEEE 802.11v standards, the network system may transmit a basic service set (BSS) transition message to a respective client device. The BSS transition message allows an AP to request a client device that is currently associated with the AP to associate with a different AP as identified by the basic service set identifier (BSSID) in the message. The client device, upon receiving the BSS transition request, can either accept or deny the request in a response message to the AP. Hence, the network system can fingerprint client devices to identify the subset of client devices that support IEEE 802.11v standards and selectively use BSS transition mechanism rather than de-authentication mechanism to move the identified subset of client devices.

Although only a few ways of selective moves have been described in details here, it shall be noted that the API can support any kind of customized and selective moves of a particular client device (or a set of client devices).

### RULE ENGINE

A network device may include a rule engine that supports determining a number of network control actions (e.g., a plurality of move mechanisms) that are supported by the network system. Move mechanisms include, but are not limited to, sticky client move (ST 250), band steer move (BS 260), load balancing move (LB 270), de-authentication move (DA 280), etc. For example, a client device may be moved by the network system because it is a "sticky" client device. A "sticky" client device generally refers to a client device that does not disassociate with an access point even though the corresponding signal strength of a received radio frequency (RF) signal is weak. As another example, a client device may be moved by the network system to be associated with the same or different AP on a different radio frequency band. Furthermore, a client device may be moved by the network system to from a first AP to a second AP in the WLAN to balance traffic load between the first AP and the second AP. Also, a client device may simply be de-authenticated by its currently associated AP, such that the client device is forced to associate with another AP in the neighborhood.

The API provides an interface to enable an external entity to the WLAN to specify dynamically one or more triggers, as well as how to map a particular client device (or set of client devices) to a particular class of service (i.e., COS 290) based on the triggers. Rule engine can then determine a course of actions to be taken on the particular client device (or set of client devices) based on the class of service.

For example, as illustrated in FIG. 2, COS level 1 may allow the use of all four different move mechanisms, such as sticky client move (ST 250), band steer move (BS 260), load balancing move (LB 270), de-authentication move (DA 280), etc. Moreover, COS level 2 may only allow three of the supported move mechanisms, such as sticky client move (ST 250), load balancing move (LB 270), de-authentication move (DA 280), etc. Furthermore, COS level 3 merely allows two of the supported move mechanisms, such as sticky client move (ST 250), band steer move (BS 260), etc. Therefore, the API provides the ability for the network system to dynamically control network configuration. Conventionally, when the network system fails to move a subset of client devices in the WLAN, the network system will need to disable the client matching feature of the WLAN infrastructure. According to the present disclosure, the network system can use different move mechanism for different client devices, and thus allow flexible use of the different move mechanisms to ensure that the client matching feature of the WLAN infrastructure works for a majority of client devices in the WLAN.

### PROCESS FOR WIRELESS DEVICE MANAGEMENT

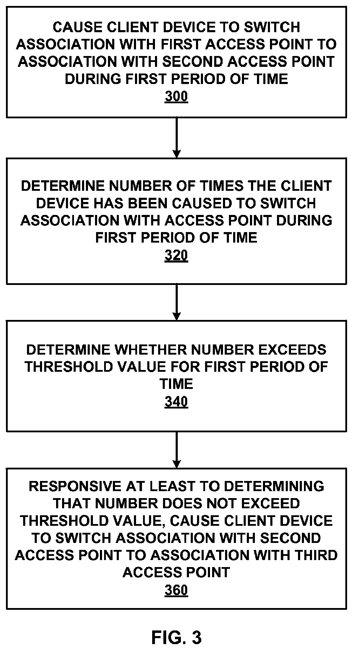

FIG. 3 illustrates an exemplary process for software-defined wireless device management in a WLAN according to examples of the present disclosure. During operations, a network device (e.g., a network controller or an access point) causes a client device to change an association with a first access point to an association with a second access point during a first period of time (operation 300). The network device then determines a number of times the client device has been caused to change an association with an access point during the first period of time (operation 320). Also, the network device determines whether the number exceeds a threshold value for the first period of time (operation 340). Responsive at least to determining that the number does not exceed the threshold value, the network device causes the client device to switch the association with the second access point to an association with the third access point (operation 360).

In some examples, responsive at least to determining that the number exceeds the threshold value, the network device refrains from causing the client device to switch the association with the second access point to the association with the third access point. Note that, the threshold value for the first period of time is based on device type. Moreover, the threshold value for the first period of time can further be based on one or more of: user role, traffic type, application type, session information, client roaming activity, device fingerprint, device signature, etc.

In some examples, responsive to determining that a service provided by the second access point does not meet one or more minimum criteria, for example, when the quality of connection is poor, the network device causes the client device to switch the association with the second access point to the association with the third access point.

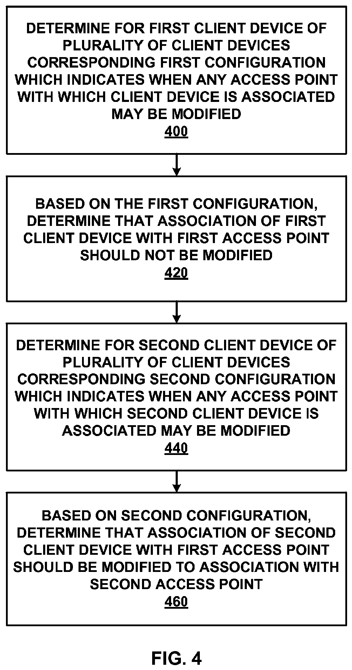

FIG. 4 illustrates another exemplary process for software-defined wireless device management in a WLAN according to examples of the present disclosure. During operations, a network device determines for a first client device of a plurality of client devices a corresponding first configuration which indicates when any access point with which the client device is associated may be modified (operation 400). Based on the first configuration, the network device further determines that an association of the first client device with a first access point should not be modified (operation 420). Also, the network device determines for a second client device of the plurality of client devices a corresponding second configuration which indicates when any access point with which the second client device is associated may be modified (operation 440). Here, the second configuration is different than the first configuration. Based on the second configuration, the network device determines that an association of the second client device with the first access point should be modified to an association with a second access point (operation 460).

In some examples, the first configuration indicates that an association of the first client device can never be caused to be modified by a network device. Thus, the client device can choose to modify its own association with the access point, but the network device will not intervene with the selection of APs for that client device.

In some examples, the first configuration indicates a maximum number of times that the association of the first client device with a current access point can be modified within a particular period of time. Furthermore, the second configuration indicates a maximum number of times that the association of the first client device with a current access point can be modified within a particular period of time.

In some examples, the network device automatically determines the first configuration and/or the second configuration based on one or more attributes associated with the first client device and/or the second client device, respectively. Note that, the attributes associated with the first client device may include a device type. In addition, the attributes associated with the first client device may also include one or more of: user role, traffic type, application type, session information, client roaming activity, device fingerprint, device signature, etc.

In some examples, the network device determines that the association of the second device with the first access point should be modified to the association with the second access point based on determining that the client device is a member of a same multicast group as client devices associated with the second access point.

In some examples, the network device determines that the association of the second client device with the first access point should be modified to the association with the second access point based on determining that the client device is on a voice call with poor quality and determining that the first configuration permits at least one more modification during the voice call.

In some examples, the network device determines that the association of the first client device with the first access point should not be modified to the association with the second access point based on determining that the first client device is on a voice call and determining that the second configuration prohibits modification during the voice call. In some examples, if it is determined that the second client device is on an active voice call, the second access point causes at least a third device to switch association with the second access point to association to a third access point.

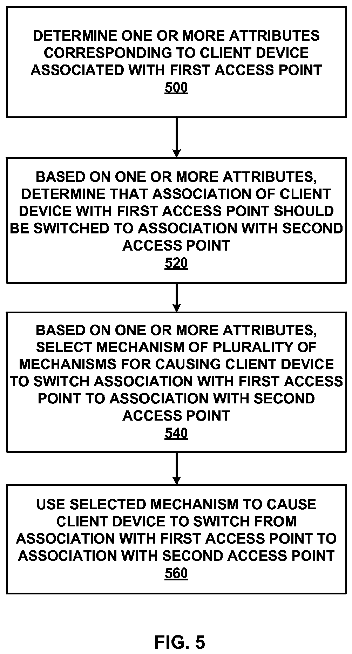

FIG. 5 illustrates yet another exemplary process for software-defined wireless device management in a WLAN according to examples of the present disclosure. During operations, a network device determines one or more attributes corresponding to a client device associated with a first access point (operation 500). Based on the one or more attributes, the network device determines that the association of the client device with the first access point should be switched to an association with a second access point (operation 520). Further, based on the one or more attributes, the network device selects a mechanism, of a plurality of mechanisms, for causing the client device to switch an association with the first access point to an association with the second access point (operation 540). Subsequently, the network device uses the selected mechanism to cause the client device to switch from the association with the first access point to the association with the second access point (operation 560).

In some examples, the selected mechanism involves the first access point transmitting de-authentication message or a dis-association message corresponding to the client device. In accordance with at least one example, receiving the set of instructions at an access point facilitates transmission of a de-authentication message or a disassociation message.

In some examples, the selected mechanism involves the first access point transmitting instructions to the client device to associate with the second access point. For example, the first access point may transmit a BSS transition request compliant with IEEE 802.11v standard to the client device to request the client device to associate with the second access point.

In some examples, the selected mechanism involves configuring the first access point to reject one or more requests from the client device and configuring the second access point to accept the one or more requests from the client device.

In some examples, the selected mechanism involves selecting a particular time during which the client device can be caused to switch association with the first access point to association with the second access point.

### SYSTEM FOR WIRELESS DEVICE MANAGEMENT

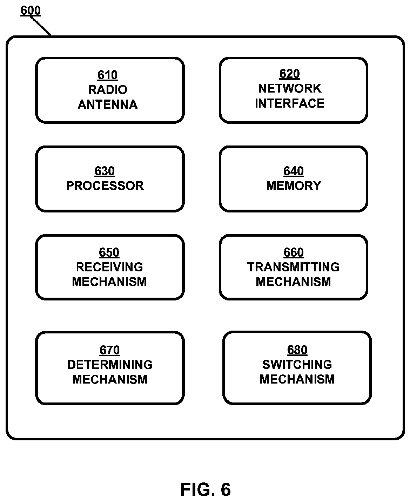

FIG. 6 is a block diagram illustrating a system for software-defined wireless device management in a WLAN according to examples of the present disclosure.

Network device 600 includes at least one or more radio antennas 610 capable of either transmitting or receiving radio signals or both, a network interface 620 capable of communicating to a wired or wireless network, a processor 630 capable of processing computing instructions, and a memory 640 capable of storing instructions and data. Moreover, network device 600 further includes a receiving mechanism 650, a transmitting mechanism 660, and a detecting mechanism 670, all of which are in communication with processor 630 and/or memory 640 in network device 600. Network device 600 may be used as a client system, or a server system, or may serve both as a client and a server in a distributed or a cloud computing environment.

Radio antenna 610 may be any combination of known or conventional electrical components for receipt of signaling, including but not limited to, transistors, capacitors, resistors, multiplexers, wiring, registers, diodes or any other electrical components known or later become known.

Network interface 620 can be any communication interface, which includes but is not limited to, a modem, token ring interface, Ethernet interface, wireless IEEE 802.11 interface, cellular wireless interface, satellite transmission interface, or any other interface for coupling network devices.

Processor 630 can include one or more microprocessors and/or network processors. Memory 640 can include storage components, such as, Dynamic Random Access Memory (DRAM), Static Random Access Memory (SRAM), etc.

Receiving mechanism 650 generally receives one or more network messages via network interface 620 or radio antenna 610 from a wireless client. The received network messages may include, but are not limited to, requests and/or responses, beacon frames, management frames, control path frames, and so on. Receiving mechanism 650 may additionally, or alternatively, receive one or more interface parameters using an application programming interface, wherein the one or more interface parameters relate to a client device in a network, wherein the one or more interface parameters are received from an external entity.

In some examples, receiving mechanism 650 may receive a user-defined rule using the application programming interface, wherein the user-defined rule related to providing network services to the client device. Receiving mechanism 650 may add the user-defined rule to the set of rules. Alternatively, the receiving mechanism 650 may communicate the user-defined rule to determining mechanism 670 such that determining mechanism 650 may add the user-defined rule to the set of rules. In at least one example, the determining mechanism 650 may add the user-defined rule to the set of rules prior to determining the network service category.

In some examples, receiving mechanism 650 may receive a pre-determined rule. The pre-determined rule may be associated with providing network services to the client device. The receiving mechanism 650 may add the pre- determined rule to a set of rules, wherein the pre-determined rule is added before the network service category is determined.

Transmitting mechanism 660 generally transmits messages, which include, but are not limited to, requests and/or responses, beacon frames, management frames, control path frames, and so on. Additionally, or alternatively, transmitting mechanism 660 may transit a set of instructions. In some examples, transmitting a set of instructions causes an access point to transmit a de-authentication message or a disassociation message to the client device.

Determining mechanism 670 generally determines whether and how to cause a client device switch to connect with a different radio and/or access point. Specifically, in some examples, determining mechanism 670 determines a number of times the client device has been caused to switch association with an access point during a period of time. Further, determining mechanism 670 can determine whether the number exceeds a threshold value for first period of time.

In accordance with at least one example, determining mechanism 670 obtains a set of rules related to providing network services to a client device. Additionally, or alternatively, determining mechanism 670 determines a network service category for the client device using the set of rules and the one or more interface parameters, wherein the network service category specifies a set of available network control actions, and wherein execution of a network control action alters a configuration of the network. Additionally, or alternatively, determining mechanism 670 determines a network control action of a set of available network control actions using one or more interface parameters. Additionally, or alternatively, determining mechanism 670 determines a set of instructions that correspond to a network control action (or a set of network control actions).

In accordance with at least one example, a network service category is associated with a quality threshold value, and wherein determining the network control action includes determining that the client device is being provided a quality of network service that is below the quality threshold value associated with the network service category.

In accordance with at least one example, a rule, as used herein, may provide a mapping between an interface parameter (or a set of interface parameters) and a network service category. In accordance with at least one example, a rule (or a pre-determined rule) may be defined using a markup language (e.g., XML).

In some examples, determining mechanism 670 determines a network control action of the set of available network control actions using one or more interface parameters. In some examples, a the network control action includes modifying association information indicating an association between a client device and an access point, inhibiting an association modification, selecting a particular mechanism for modifying the association information, selecting a particular time for modifying the association information, or enforcing a threshold number of association modifications for the client device during a specified time period.

In some examples, determining mechanism 670 determines a network control action. In some examples, determining a network control action includes determining a threshold value corresponding to a maximum number of times an association for the client device can be modified within a period of time and determining a number of association changes for the client device occurring within the period of time, wherein execution of the determined network control action inhibits a change to the association when the number of association changes occurring within the period of time exceeds the threshold value. In some examples, the network control action allows a change to the association when the number of association changes occurring within the period of time is less than a threshold number. The threshold number may be the same or a different number than the threshold value corresponding to a maximum number of times the association for the client device can be modified within a period of time.

In some examples, determining mechanism 670 determines a network control action. In some examples, determining a network control action includes determining a multicast group for the client device from the configuration information. In some examples, determining a network control action includes determining an additional multicast group associated with an additional client device on the network and determining that the multicast group for the client device is the same as the additional multicast group of the additional client device, wherein executing the network control action modifies the association information associated with the client device, and wherein modifying the association information for the client device causes the client device and the additional client device to be associated with a same access point.

In some examples, determining mechanism 670 determines a network control action. In some examples, determining a network control action includes determining, using the one or more interface parameters, that the client device is being provided a quality of network service below a quality threshold value associated with the network service category.

In some examples, execution of the determined network control action allows a change to the association when the number of association changes occurring within the period of time is less than the threshold value. In some examples, the threshold value is determined using the one or more interface parameters, roaming activity information of the client device, a fingerprint of the client device, or a signature of the client device.

In some examples, determining mechanism 670 maintains a data store for storing information related to one or more client devices and one or more access points and stores the one or more interface parameters in the information data store.

In some examples, determining mechanism 670 determines that the association of the first client device with the first access point should not be modified to the association with the second access point based on determining that the first client device is on a voice call and determining that the second configuration prohibits modification during the voice call.

In some examples, determining mechanism 670 determines for a first client device of a plurality of client devices a corresponding first configuration, which indicates when any access point with which the client device is associated may be modified. Based on the first configuration, determining mechanism 670 determines that an association of the first client device with a first access point should not be modified. Furthermore, determining mechanism 670 determines for a second client device of the plurality of client devices a corresponding second configuration, which indicates when any access point with which the second client device is associated may be modified. Note that, the second configuration is different than the first configuration. Based on the second configuration, determining mechanism 670 can determine that an association of the second client device with the first access point should be modified to an association with a second access point.

In some examples, the first configuration indicates that an association of the first client device can never be caused to be modified by a network device. In some examples, the first configuration indicates a maximum number of times that the association of the first client device with a current access point can be modified within a particular period of time. In some examples, the second configuration indicates a maximum number of times that the association of the first client device with a current access point can be modified within a particular period of time. Additionally, or alternatively transmitting mechanism 660 may transmit a set of instructions, using the one or more processors. Transmitting the set of instructions may facilitate execution of one or more network control actions by one or more network devices.

In some examples, determining mechanism 670 automatically determines the first configuration and/or the second configuration based on one or more attributes associated with the first client device and/or the second client device, respectively. The attributes associated with the first client device may include, but are not limited to, a device type, a user role, a traffic type, an application type, session information, a client roaming activity, a device fingerprint, a device signature, etc.

In some examples, determining mechanism 670 determines that the association of the second device with the first access point should be modified to the association with the second access point based on determining that the client device is a member of a same multicast group as client devices associated with the second access point.

In some examples, determining mechanism 670 determines that the association of the second client device with the first access point should be modified to the association with the second access point based on determining that the client device is on a voice call with poor quality and determining that the first configuration permits at least one more modification during the voice call.

Furthermore, determining mechanism 670 can determine one or more attributes corresponding to a client device associated with a first access point. Based on the one or more attributes, determining mechanism 670 determines that the association of the client device with the first access point should be switched to an association with a second access point.

Switching mechanism 680 generally causes a client device to switch to a different radio and/or access point. Specifically, switching mechanism 680 can cause a client device to switch association with a first access point to an association with a second access point during a first period of time. Responsive at least to determining mechanism 670 determines that the number does not exceed the threshold value, switching mechanism 680 causes the client device to switch the association with the second access point to an association with the third access point. Responsive at least to determining mechanism 670 determines that the number exceeds the threshold value, switching mechanism 680 refrains from causing the client device to switch the association with the second access point to the association with the third access point. Note that, the threshold value for the first period of time is based on one or more attributes of a device type, a user role, a traffic type, an application type, session information, a client roaming activity, a device fingerprint, a device signature, etc.

Moreover, based on the above one or more attributes, switching mechanism 680 can select one of a plurality of mechanisms for causing the client device to switch an association with the first access point to an association with the second access point. Further, switching mechanism 680 uses the selected mechanism to cause the client device to switch from the association with the first access point to the association with the second access point. In some examples, the selected mechanism may involve the first access point transmitting de-authentication message or a dis-association message corresponding to the client device. In some examples, the selected mechanism may involve the first access point transmitting instructions to the client device to associate with the second access point. In some examples, the selected mechanism may involve configuring the first access point to reject one or more requests from the client device and configuring the second access point to accept the one or more requests from the client device. In some examples, the selected mechanism involves selecting a particular time during which the client device can be caused to switch association with the first access point to association with the second access point.

In some examples, responsive to determining mechanism 670 determines that a service provided by the second access point does not meet a minimum criteria, switching mechanism 680 causes the client device to switch the association with the second access point to the association with the third access point.

In some examples, responsive to determining mechanism 670 determines that the second client device is on an active voice call, switching mechanism 680 causes at least a third device to switch association with the second access point to association to a third access point.

The present disclosure may be realized in hardware, software, or a combination of hardware and software. The present disclosure may be realized in a centralized fashion in one computer system or in a distributed fashion where different elements are spread across several interconnected computer systems coupled to a network. A typical combination of hardware and software may be an access point with a computer program that, when being loaded and executed, controls the device such that it carries out the methods described herein.

The present disclosure also may be embedded in non-transitory fashion in a computer-readable storage medium (e.g., a programmable circuit; a semiconductor memory such as a volatile memory such as random access memory "RAM," or nonvolatile memory such as read-only memory, power-backed RAM, flash memory, phase-change memory or the like; a hard disk drive; an optical disc drive; or any connector for receiving a portable memory device such as a Universal Serial Bus "USB" flash drive), which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

As used herein, "network device" generally includes a device that is adapted to transmit and/or receive signaling and to process information within such signaling such as a station (e.g., any data processing equipment such as a computer, cellular phone, personal digital assistant, tablet devices, etc.), an access point, data transfer devices (such as network switches, routers, controllers, etc.) or the like.

As used herein, the term "interconnect" or used descriptively as "interconnected" is generally defined as a communication pathway established over an information-carrying medium. The "interconnect" may be a wired interconnect, wherein the medium is a physical medium (e.g., electrical wire, optical fiber, cable, bus traces, etc.), a wireless interconnect (e.g., air in combination with wireless signaling technology) or a combination of these technologies.

As used herein, "information" is generally defined as data, address, control, management (e.g., statistics) or any combination thereof. For transmission, information may be transmitted as a message, namely a collection of bits in a predetermined format. One type of message, namely a wireless message, includes a header and payload data having a predetermined number of bits of information. The wireless message may be placed in a format as one or more packets, frames or cells.

As used herein, "wireless local area network" (WLAN) generally refers to a communications network that links two or more devices using some wireless distribution method (for example, spread-spectrum or orthogonal frequency-division multiplexing radio), and usually providing a connection through an access point to the Internet; and thus, providing users with the mobility to move around within a local coverage area and still stay connected to the network.

As used herein, the term "mechanism" generally refers to a component of a system or device to serve one or more functions, including but not limited to, software components, electronic components, electrical components, mechanical components, electro-mechanical components, etc.

As used herein, the term "example" generally refers an example that serves to illustrate by way of example but not limitation.

## Claims

1. A network controller device (600), wherein the network controller device comprises:
a wireless receiver (650) for receiving, using one or more processors (630), an interface parameter, wherein the interface parameter is received from an external entity using an application programming interface, and wherein the interface parameter is associated with a client device in the network;
a rules engine (670) configured to perform operations including:
obtaining a set of rules from a database, wherein the set of rules are associated with the network, and wherein the set of rules facilitate providing network services to the client device on the network;
determining a network service category for the client device using the interface parameter and the set of rules, wherein the network service category specifies a set of available network control actions, and wherein a network control action affects a configuration of the network;
determining the network control action using the interface parameter, determining the network control action includes:
determining a threshold value corresponding to a maximum number of times an association between the client device and an access point can be modified within a period of time; and
determining a number of association changes for the client device occurring within the period of time, wherein execution of the determined network control action inhibits a change to the association when the number of association changes occurring within the period of time exceeds the threshold value;
wherein the threshold value is determined using a fingerprint of the client device, wherein the fingerprint identifies a device type and/or operating system of the client device; and
determining a set of instructions corresponding to the network control action; and
a transmitter (660) for transmitting the set of instructions, wherein transmitting the set of instructions facilitates execution of the network control action by a network device.

2. The network controller device of claim 1 wherein the set of available network control actions includes modifying association information indicating an association between the client device and an access point, inhibiting an association modification, selecting a particular mechanism for modifying the association information, or selecting a particular time for modifying the association information, or enforcing a threshold number of association modifications for the client device during a specified time period.

3. The network controller device of claim 1, wherein interface parameters include a traffic type, a user role, an operating system, session information, a device type, a manufacturer, a network interface card (NIC), or an application type.

4. The network controller device of any of claims 1-3, wherein execution of the determined network control action allows a change to the association when the number of association changes occurring within the period of time is less than a threshold number.

5. The network controller device of any of claims 1-4, wherein the fingerprint identifies whether the client device supports IEEE 802.11v standards.

6. The network controller device of any of claims 1-4, wherein the threshold value is determined using an interface parameter, roaming activity information of the client device or a signature of the client device.

7. The network controller device of any of claims 1-6, wherein the rules engine is configured to perform further operations including:
maintaining a data store for storing information associated with a client device and an access point; and
storing the interface parameter in the information data store.

8. A computer-implemented method, comprising:
receiving, using one or more processors (630), an interface parameter, wherein the interface parameter is received from an external entity using an application programming interface, and wherein the interface parameter is associated with a client device (160, 164, 186) in a network (100);
obtaining a set of rules associated with the network, wherein the set of rules facilitate providing network services to the client device on the network, and wherein the set of rules are stored in a database;
determining a network service category for the client device using the interface parameter and the set of rules, wherein the network service category specifies a set of available network control actions, and wherein a network control action affects a configuration of the network;
determining a network control action using the interface parameter, determining the network control action includes:
determining a threshold value corresponding to a maximum number of times an association between the client device and an access point can be modified within a period of time; and
determining a number of association changes for the client device occurring within the period of time, wherein execution of the determined network control action inhibits a change to the association when the number of association changes occurring within the period of time exceeds the threshold value;
wherein the threshold value is determined using a fingerprint of the client device, wherein the fingerprint identifies a device type and/or operating system of the client device; and
determining a set of instructions corresponding to the network control action; and
transmitting the set of instructions, wherein transmitting the set of instructions facilitates execution of the network control action by a network device.

9. The computer implemented method of claim 8, wherein the set of available network control actions includes modifying association information indicating an association between a client device and an access point, inhibiting an association modification, selecting a particular mechanism for modifying the association information, selecting a particular time for modifying the association information, or enforcing a threshold number of association modifications for the client device during a specified time period.

10. The computer-implemented method of claim 8 or 9, wherein interface parameters include a traffic type, a user role, an operating system, session information, a device type, a manufacturer, a network interface card (NIC), or an application type.

11. The computer-implemented method of any of claims 8-10, wherein execution of the determined network control action allows a change to the association when the number of association changes occurring within the period of time is less than a threshold value.

12. The computer-implemented method of any of claims 8-11, wherein the fingerprint identifies whether the client device supports IEEE 802.11v standards.

13. The computer-implemented method of any of claims 8-11, wherein a threshold value is determined using an interface parameter, roaming activity information of the client device or a signature of the client device.

14. The computer-implemented method of any of claims 8-13, further comprising:
maintaining a data store for storing information associated with a client device and an access point; and
storing the interface parameter in the information data store.

## Patentansprüche

1. Netzwerksteuerungsvorrichtung (600), wobei die Netzwerksteuerungsvorrichtung Folgendes umfasst:
einen drahtlosen Empfänger (650) zum Empfangen, unter Verwendung eines oder mehrerer Prozessoren (630), eines Schnittstellenparameters, wobei der Schnittstellenparameter von einer externen Einheit unter Verwendung einer Anwendungsprogrammierschnittstelle empfangen wird und wobei der Schnittstellenparameter einer Client-Vorrichtung in dem Netzwerk zugeordnet ist;
eine Regelmaschine (670), die dazu konfiguriert ist, Vorgänge durchzuführen, die Folgendes beinhalten:
Erhalten eines Satzes von Regeln aus einer Datenbank, wobei der Satz von Regeln dem Netzwerk zugeordnet ist, und wobei der Satz von Regeln ein Bereitstellen von Netzwerkdiensten an die Client-Vorrichtung in dem Netzwerk erleichtert;
Bestimmen einer Netzwerkdienstkategorie für die Client-Vorrichtung unter Verwendung des Schnittstellenparameters und des Satzes von Regeln, wobei die Netzwerkdienstkategorie einen Satz von verfügbaren Netzwerksteuerungsaktionen spezifiziert und wobei eine Netzwerksteuerungsaktion eine Konfiguration des Netzwerks beeinflusst;
Bestimmen der Netzwerksteuerungsaktion unter Verwendung des Schnittstellenparameters, wobei das Bestimmen der Netzwerksteuerungsaktion Folgendes beinhaltet:
Bestimmen eines Schwellenwerts, der einer maximalen Anzahl von Malen entspricht, die eine Zuordnung zwischen der Client-Vorrichtung und einem Zugriffspunkt innerhalb eines Zeitraums modifiziert werden kann; und
Bestimmen einer Anzahl von Zuordnungsänderungen für die Client-Vorrichtung, die innerhalb des Zeitraums auftreten, wobei eine Ausführung der bestimmten Netzwerksteuerungsaktion eine Änderung der Zuordnung verhindert, wenn die Anzahl der Zuordnungsänderungen, die innerhalb des Zeitraums auftreten, den Schwellenwert überschreitet;
wobei der Schwellenwert unter Verwendung eines Fingerabdrucks der Client-Vorrichtung bestimmt wird, wobei der Fingerabdruck eine Vorrichtungsart und/oder ein Betriebssystem der Client-Vorrichtung identifiziert; und
Bestimmen eines Satzes von Anweisungen, die der Netzwerksteuerungsaktion entsprechen; und
einen Sender (660) zum Senden des Satzes von Anweisungen, wobei das Senden des Satzes von Anweisungen eine Ausführung der Netzwerksteuerungsaktion durch eine Netzwerkvorrichtung erleichtert.

2. Netzwerksteuerungsvorrichtung nach Anspruch 1, wobei der Satz verfügbarer Netzwerksteuerungsaktionen ein Modifizieren von Zuordnungsinformationen, die eine Zuordnung zwischen der Client-Vorrichtung und einem Zugriffspunkt anzeigen, ein Verhindern einer Zuordnungsmodifikation, ein Auswählen eines bestimmten Mechanismus zum Modifizieren der Zuordnungsinformationen oder ein Auswählen eines bestimmten Zeitpunkts zum Modifizieren der Zuordnungsinformationen oder ein Erzwingen einer Schwellenzahl von Zuordnungsmodifikationen für die Client-Vorrichtung während eines spezifizierten Zeitraums beinhaltet.

3. Netzwerksteuerungsvorrichtung nach Anspruch 1, wobei Schnittstellenparameter eine Datenverkehrsart, eine Benutzerrolle, ein Betriebssystem, Sitzungsinformationen, eine Vorrichtungsart, einen Hersteller, eine Netzwerkkarte (Network Interface Card ― NIC) oder eine Anwendungsart beinhalten.

4. Netzwerksteuerungsvorrichtung nach einem der Ansprüche 1―3, wobei die Ausführung der bestimmten Netzwerksteuerungsaktion eine Änderung der Zuordnung ermöglicht, wenn die Anzahl der Zuordnungsänderungen, die innerhalb des Zeitraums auftreten, geringer als eine Schwellenzahl ist.

5. Netzwerksteuerungsvorrichtung nach einem der Ansprüche 1―4, wobei der Fingerabdruck identifiziert, ob die Client-Vorrichtung IEEE 802.11v-Standards unterstützt.

6. Netzwerksteuerungsvorrichtung nach einem der Ansprüche 1―4, wobei der Schwellenwert unter Verwendung eines Schnittstellenparameters, von Roaming-Aktivitätsinformationen der Client-Vorrichtung oder einer Signatur der Client-Vorrichtung bestimmt wird.

7. Netzwerksteuerungsvorrichtung nach einem der Ansprüche 1―6, wobei die Regelmaschine dazu konfiguriert ist, weitere Vorgänge durchzuführen, die Folgendes beinhalten:
Verwalten eines Datenspeichers zum Speichern von Informationen, die einer Client-Vorrichtung und einem Zugriffspunkt zugeordnet sind; und
Speichern des Schnittstellenparameters in dem Informationsdatenspeicher.

8. Computerimplementiertes Verfahren, das Folgendes umfasst:
Empfangen, unter Verwendung eines oder mehrerer Prozessoren (630), eines Schnittstellenparameters, wobei der Schnittstellenparameter von einer externen Einheit unter Verwendung einer Anwendungsprogrammierschnittstelle empfangen wird und wobei der Schnittstellenparameter einer Client-Vorrichtung (160, 164, 186) in einem Netzwerk (100) zugeordnet ist;
Erhalten eines Satzes von Regeln, der dem Netzwerk zugeordnet ist, wobei der Satz von Regeln das Bereitstellen von Netzwerkdiensten an die Client-Vorrichtung in dem Netzwerk erleichtert und wobei der Satz von Regeln in einer Datenbank gespeichert ist;
Bestimmen einer Netzwerkdienstkategorie für die Client-Vorrichtung unter Verwendung des Schnittstellenparameters und des Satzes von Regeln, wobei die Netzwerkdienstkategorie einen Satz von verfügbaren Netzwerksteuerungsaktionen spezifiziert und wobei eine Netzwerksteuerungsaktion eine Konfiguration des Netzwerks beeinflusst;
Bestimmen einer Netzwerksteuerungsaktion unter Verwendung des Schnittstellenparameters, wobei das Bestimmen der Netzwerksteuerungsaktion Folgendes beinhaltet:
Bestimmen eines Schwellenwerts, der einer maximalen Anzahl von Malen entspricht, die eine Zuordnung zwischen der Client-Vorrichtung und einem Zugriffspunkt innerhalb eines Zeitraums modifiziert werden kann; und
Bestimmen einer Anzahl von Zuordnungsänderungen für die Client-Vorrichtung, die innerhalb des Zeitraums auftreten, wobei eine Ausführung der bestimmten Netzwerksteuerungsaktion eine Änderung der Zuordnung verhindert, wenn die Anzahl der Zuordnungsänderungen, die innerhalb des Zeitraums auftreten, den Schwellenwert überschreitet;
wobei der Schwellenwert unter Verwendung eines Fingerabdrucks der Client-Vorrichtung bestimmt wird, wobei der Fingerabdruck eine Vorrichtungsart und/oder ein Betriebssystem der Client-Vorrichtung identifiziert; und
Bestimmen eines Satzes von Anweisungen, die der Netzwerksteuerungsaktion entsprechen; und
Senden des Satzes von Anweisungen, wobei das Senden des Satzes von Anweisungen eine Ausführung der Netzwerksteuerungsaktion durch eine Netzwerkvorrichtung erleichtert.

9. Computerimplementiertes Verfahren nach Anspruch 8, wobei der Satz verfügbarer Netzwerksteuerungsaktionen ein Modifizieren von Zuordnungsinformationen, die eine Zuordnung zwischen einer Client-Vorrichtung und einem Zugriffspunkt anzeigen, ein Verhindern einer Zuordnungsmodifikation, ein Auswählen eines bestimmten Mechanismus zum Modifizieren der Zuordnungsinformationen, ein Auswählen eines bestimmten Zeitpunkts zum Modifizieren der Zuordnungsinformationen oder ein Erzwingen einer Schwellenzahl von Zuordnungsmodifikationen für die Client-Vorrichtung während eines spezifizierten Zeitraums beinhaltet.

10. Computerimplementiertes Verfahren nach Anspruch 8 oder 9, wobei Schnittstellenparameter eine Datenverkehrsart, eine Benutzerrolle, ein Betriebssystem, Sitzungsinformationen, eine Vorrichtungsart, einen Hersteller, eine Netzwerkkarte (NIC) oder eine Anwendungsart beinhalten.

11. Computerimplementiertes Verfahren nach einem der Ansprüche 8―10, wobei die Ausführung der bestimmten Netzwerksteuerungsaktion eine Änderung der Zuordnung ermöglicht, wenn die Anzahl der Zuordnungsänderungen, die innerhalb des Zeitraums auftreten, geringer als ein Schwellenwert ist.

12. Computerimplementiertes Verfahren nach einem der Ansprüche 8―11, wobei der Fingerabdruck identifiziert, ob die Client-Vorrichtung IEEE 802.11v-Standards unterstützt.

13. Computerimplementiertes Verfahren nach einem der Ansprüche 8-11, wobei ein Schwellenwert unter Verwendung eines Schnittstellenparameters, von Roaming-Aktivitätsinformationen der Client-Vorrichtung oder einer Signatur der Client-Vorrichtung bestimmt wird.

14. Computerimplementiertes Verfahren nach einem der Ansprüche 8-13, das ferner Folgendes umfasst:
Verwalten eines Datenspeichers zum Speichern von Informationen, die einer Client-Vorrichtung und einem Zugriffspunkt zugeordnet sind; und
Speichern des Schnittstellenparameters in dem Informationsdatenspeicher.

## Revendications

1. Dispositif de gestion de réseau (600), le dispositif de gestion de réseau comprenant :
un récepteur sans fil (650) pour recevoir, à l'aide d'un ou plusieurs processeurs (630), un paramètre d'interface, le paramètre d'interface étant reçu d'une entité externe à l'aide d'une interface de programmation d'application, et le paramètre d'interface étant associé à un dispositif client dans le réseau ;
un moteur de règles (670) configuré pour effectuer des opérations comprenant :
l'obtention d'un ensemble de règles à partir d'une base de données, l'ensemble de règles étant associé au réseau, et l'ensemble de règles facilitant la fourniture de services réseau au dispositif client sur le réseau ;
la détermination d'une catégorie de service réseau pour le dispositif client à l'aide du paramètre d'interface et de l'ensemble de règles, la catégorie de service réseau spécifiant un ensemble d'actions de gestion de réseau disponibles, et une action de gestion de réseau affectant une configuration du réseau ;
la détermination de l'action de gestion de réseau à l'aide du paramètre d'interface, la détermination de l'action de gestion de réseau comporte :
la détermination d'une valeur de seuil correspondant à un nombre maximum de fois où une association entre le dispositif client et un point d'accès peut être modifiée durant un laps de temps ; et
la détermination d'un certain nombre de changements d'association pour le dispositif client se produisant durant le laps de temps, l'exécution de l'action de gestion de réseau déterminée inhibant un changement de l'association lorsque le nombre de changements d'association se produisant durant le laps de temps dépasse la valeur de seuil ;
dans lequel la valeur de seuil est déterminée à l'aide d'une empreinte digitale du dispositif client, l'empreinte digitale identifiant un type de dispositif et/ou un système d'exploitation du dispositif client ; et
la détermination d'un ensemble d'instructions correspondant à l'action de gestion de réseau ; et
un émetteur (660) pour transmettre l'ensemble d'instructions, la transmission de l'ensemble d'instructions facilitant l'exécution de l'action de gestion de réseau par un dispositif de réseau.

2. Dispositif de gestion de réseau selon la revendication 1, dans lequel l'ensemble d'actions de gestion de réseau disponibles comporte la modification d'informations d'association indiquant une association entre le dispositif client et un point d'accès, l'inhibition d'une modification d'association, la sélection d'un mécanisme particulier pour modifier les informations d'association ou la sélection d'un moment précis pour modifier les informations d'association, ou le fait d'imposer un nombre seuil de modifications d'association pour le dispositif client pendant un laps de temps spécifié.

3. Dispositif de gestion de réseau selon la revendication 1, dans lequel les paramètres d'interface comportent un type de trafic, un rôle d'utilisateur, un système d'exploitation, des informations de session, un type de dispositif, un fabricant, une carte d'interface réseau (NIC) ou un type d'application.

4. Dispositif de gestion de réseau selon l'une quelconque des revendications 1 à 3, dans lequel l'exécution de l'action de gestion de réseau déterminée permet un changement de l'association lorsque le nombre de changements d'association se produisant durant le laps de temps est inférieur à un nombre seuil.

5. Dispositif de gestion de réseau selon l'une quelconque des revendications 1 à 4, dans lequel l'empreinte digitale identifie si le dispositif client prend en charge les normes IEEE 802.11v.

6. Dispositif de gestion de réseau selon l'une quelconque des revendications 1 à 4, dans lequel la valeur de seuil est déterminée à l'aide d'un paramètre d'interface, des informations d'activité d'itinérance du dispositif client ou d'une signature du dispositif client.

7. Dispositif de gestion de réseau selon l'une quelconque des revendications 1 à 6, dans lequel le moteur de règles est configuré pour effectuer d'autres opérations comportant :
le maintien d'une mémoire de données pour stocker des informations associées à un dispositif client et à un point d'accès ; et
le stockage du paramètre d'interface dans la mémoire de données d'informations.

8. Procédé mis en œuvre par ordinateur comprenant :
la réception, à l'aide d'un ou plusieurs processeurs (630), d'un paramètre d'interface, le paramètre d'interface étant reçu d'une entité externe à l'aide d'une interface de programmation d'application, et le paramètre d'interface étant associé à un dispositif client (160, 164, 186) dans un réseau (100) ;
l'obtention d'un ensemble de règles associées au réseau, l'ensemble de règles facilitant la fourniture de services réseau au dispositif client sur le réseau, et l'ensemble de règles étant stocké dans une base de données ;
la détermination d'une catégorie de service réseau pour le dispositif client à l'aide du paramètre d'interface et de l'ensemble de règles, la catégorie de service réseau spécifiant un ensemble d'actions de gestion de réseau disponibles, et une action de gestion de réseau affectant une configuration du réseau ;
la détermination d'une action de gestion de réseau à l'aide du paramètre d'interface, la détermination de l'action de gestion de réseau comporte :
la détermination d'une valeur de seuil correspondant à un nombre maximum de fois où une association entre le dispositif client et un point d'accès peut être modifiée durant un laps de temps ; et
la détermination d'un certain nombre de changements d'association pour le dispositif client se produisant durant le laps de temps, l'exécution de l'action de gestion de réseau déterminée inhibant un changement de l'association lorsque le nombre de changements d'association se produisant durant le laps de temps dépasse la valeur de seuil ;
dans lequel la valeur de seuil est déterminée à l'aide d'une empreinte digitale du dispositif client, l'empreinte digitale identifiant un type de dispositif et/ou un système d'exploitation du dispositif client ; et
la détermination d'un ensemble d'instructions correspondant à l'action de gestion de réseau ; et
la transmission de l'ensemble d'instructions, la transmission de l'ensemble d'instructions facilitant l'exécution de l'action de gestion de réseau par un dispositif de réseau.

9. Procédé mis en œuvre par ordinateur selon la revendication 8, dans lequel l'ensemble d'actions de gestion de réseau disponibles comporte la modification d'informations d'association indiquant une association entre un dispositif client et un point d'accès, l'inhibition d'une modification d'association, la sélection d'un mécanisme particulier pour modifier les informations d'association, la sélection d'un moment précis pour modifier les informations d'association, ou le fait d'imposer un nombre seuil de modifications d'association pour le dispositif client pendant un laps de temps spécifiée.

10. Procédé mis en œuvre par ordinateur selon la revendication 8 ou 9, dans lequel les paramètres d'interface comportent un type de trafic, un rôle d'utilisateur, un système d'exploitation, des informations de session, un type de dispositif, un fabricant, une carte d'interface réseau (NIC) ou un type d'application.

11. Procédé mis en œuvre par ordinateur selon l'une quelconque des revendications 8 à 10, dans lequel l'exécution de l'action de gestion de réseau déterminée permet un changement de l'association lorsque le nombre de changements d'association se produisant durant le laps de temps est inférieur à une valeur seuil.

12. Procédé mis en œuvre par ordinateur selon l'une quelconque des revendications 8 à 11, dans lequel l'empreinte digitale identifie si le dispositif client prend en charge les normes IEEE 802.11v.

13. Procédé mis en œuvre par ordinateur selon l'une quelconque des revendications 8 à 11, dans lequel une valeur de seuil est déterminée à l'aide d'un paramètre d'interface, des informations d'activité d'itinérance du dispositif client ou d'une signature du dispositif client.

14. Procédé selon l'une quelconque des revendications 8 à 13, comprenant en outre :
le maintien d'une mémoire de données pour stocker des informations associées à un dispositif client et à un point d'accès ; et
le stockage du paramètre d'interface dans la mémoire de données d'informations.
